# EUROPEAN PATENT SPECIFICATION

(11) **EP 0 332 393 B1**
(45) Date of publication and mention of the grant of the patent: **22.06.1994**
(21) Application number: 89302254.1
(22) Date of filing: 07.03.1989
(51) Int. Cl.: C04B 35/44, C04B 35/64, G02B 1/02

(54) **Method of producing a light-transmitting spinel sintered body**
Verfahren zur Herstellung eines lichtdurchlässigen Körpers aus gesintertem Spinell
Méthode pour la production d'un objet fritté transparent à base de spinelle

(30) Priority: 09.03.1988 JP 55843/88; 09.03.1988 JP 55844/88; 05.07.1988 JP 167616/88
(43) Date of publication of application: 13.09.1989
(73) Proprietor: SUMITOMO ELECTRIC INDUSTRIES, LTD., Osaka-shi, Osaka 541 (JP)
(72) Inventor: Shibata, Kenichiro, 1-1 Koyakita 1-chome Itami-shi Hyogo (JP); Nakamura, Hiroshi, 1-1 Koyakita 1-chome Itami-shi Hyogo (JP)
(74) Representative: Bankes, Stephen Charles Digby

(56) References cited:
- WO-A-88/08829
- FR-A- 2 107 166
- GB-A- 2 031 399
- US-A- 3 974 249

## Description

The present invention relates to a method of producing a polycrystalline spinel sintered body superior in light transmission, and in particular a light-transmitting spinel sintered body having a high density suitable for use in infrared light-transmitting windows or the like, such as are used at thicknesses of 2 mm or more.

It is known that a spinel (MgAl₂O₄) is an oxide consisting of magnesia (MgO) and alumina (Al₂O₃) and has a cubic crystal system, so that light is difficult to scatter on the boundary surfaces of the crystals, and that where it is sintered at high density, an excellent light transmission can be achieved.

Usually, the light transmission of the spinel sintered body is suddenly increased from the vicinity of a wavelength of 0.4»m in the visible range to amount to a maximum value in the vicinity of wavelengths of 3 to 5»m in the infrared range. Accordingly, the spinel sintered body has shown promise as a light-transmitting material, such as an optical window, and various methods have been tried for producing it.

There is disclosed for example in JP-A-47-6028 a method in which lithium fluoride (LiF) is added as the sintering aid and the resulting mixture is hot pressed in a vacuum.

In addition, JP-A-55-27037 discloses a method in which LiF is added as a sintering aid to a mixture comprising MgO and Al₂O₃, in an equimolecular ratio or with a slight excess of Al₂O₃, and the resulting mixture is sintered under normal pressure. JP-A-59-121158 discloses a method in which LiF is added to fine spinel powders, which are obtained by hydrolyzing an alcoxide, and the resulting mixture is sintered in hydrogen under normal pressure. JP-A-62-72556 discloses a method in which a mixture comprising a highly pure MgAl₂O₄ material and ultra fine Al₂O₃ powders obtained by the alcoxide method is moulded and then baked in a vacuum or an atmosphere of hydrogen. It is known that in these so-called normal-pressure sintering methods (non-pressurizing sintering methods) it is necessary to add a sintering aid. For this purpose calcium oxide (CaO) is also effective in addition to the above described LiF.

In addition, in the normal pressure sintering method a sintered body having a composition comprising an excess of MgO or a slight excess of Al₂O₃ is produced in addition to a sintered body having a composition comprising Al₂O₃ and MgO in an equimolecular ratio of 0.5 : 0.5.

All of the above described conventional methods of producing a light-transmitting spinel sintered body have shown disadvantages in that the sintering aid, such as LiF, is added to aid compaction, so that a second phase is apt to appear, whereby light is scattered by the heterogeneous system, reducing linear transmission.

Besides, the above described vacuum hot pressing method has the disadvantage that high temperatures of 1,300 to 1,600°C and high pressures of 98.1 MPa (1,000 kg/cm²) or more are required, so that conventionally used mould materials such as graphite are insufficient in strength and it is difficult to produce a large-sized sintered body. Large-scale equipment is needed so that productivity is reduced, and the cost is increased due to the above described requirements of high temperature and high pressure. Disadvantages occur also in that a disk-shaped product can be obtained but products having other shapes cannot be produced with a high yield.

In addition, in the latter normal pressure sintering method it is difficult to control the growth of grains and voids are apt to remain, so that the level of light transmission is reduced and also, in the case where the compositional ratio of MgO and Al₂O₃ is changed in addition to the addition of the sintering aid, a second phase is apt to appear, forming a heterogeneous system, whereby light is scattered, further reducing the linear transmission.

As above described, the light-transmitting spinel sintered bodies produced by the conventional methods have shown a linear transmission, at a sample thickness of 1 mm, of at most 75 to 80%. For use in an infrared transmitting window, which requires a sample thickness of 2 mm or more, the linear transmission must be further improved.

According to a first aspect of the present invention there is provided a method of producing a light-transmitting spinel sintered body from spinel powders having a purity of 99.5% or more and a specific surface area of at least 10 m²/g which comprises the steps of:
a) subjecting the spinel powders to isostatic moulding at pressures of 98.1 MPa (1 tonne/cm²) or more to impart a specific gravity of 2.0 or more and sintering the resulting moulded body in a multi-stage process using a sintering aid, and thereafter increasing the density and light transmission of the resulting sintered body by either:
b) subjecting the sintered body to a hot isostatic pressure treatment at a temperature of 1,400 to 1,800°C and a pressure of 49.03 MPa (500 kg/cm²) or more or
c) treating the sintered body in a furnace with a gas at a pressure of 981 kPa (10 kg/cm²) or more. It is possible by means of the present invention to provide a light-transmitting spinel sintered body having a high purity, a high density and a high level of light transmission and a linear transmission suitable particularly for an infrared transmitting window having a thickness of 2 mm or more.

According to a further aspect, the present invention provides a process for producing a light-transmitting spinel sintered body which comprises hot pressing spinel powders having a purity of 99.5% or more and a specific surface area (BET value) of 10 m²/g or more, preferably 11 to 14 m²/g, at temperatures of 1,200 to 1,700°C and pressures of 9.81 to 49.03 MPa (100 to 500 kg/cm²) in vacuum to compact them to a density ratio relative to the theoretical one of 95% or more and then subjecting the hot-pressed powders to the HIP treatment in the presence of nitrogen or an inert gas mixed with oxygen at temperatures of 1,400 to 1,800°C and pressures of 49.03 MPa (500 kg/cm²) or more. the light-transmitting spinel sintered body which is obtained according to the invention is formed of a polycrystalline spinel sintered body having a purity of 99.5% or more and has a linear transmission at a thickness of sample of 3 mm of 65% or more on the average for visible and hear infrared rays having wavelengths of 0.4 to 3»m and 75% or more in maximum for infrared rays having wavelengths of 3 to 5»m, which is remarkably superior in comparison with that of the conventional spinel sintered bodies. this light transmission is suitable for a material of an infrared transmitting window.

The fine spinel powders used in the process of the invention preferably have a purity of 99.9% or more. Following the isostatic moulding step (a) described above, the moulded body is subjected to a multi-stage sintering process preferably for 2 to 24 hours at temperatures of 1,400 to 1,800°C in a vacuum or an atmosphere of hydrogen or helium to increase its density to 95% or more relative to the theoretical density. The HIP treatment is preferably carried out at a pressure not exceeding 196 MPa (2,000 kg/cm²), and preferably in an atmosphere of nitrogen gas, oxygen gas, an inert gas such as argon or a mixture thereof. When the sintered body is treated in a furnace with a pressurized gas, the gas used is preferably nitrogen, argon, helium or mixture thereof. The pressure used preferably does not exceed 14.7 MPa (150 kg/cm²).

According to the above described process of hot pressing in vacuum and the subsequent HIP (hot isostatic pressing) there can be provided a spinel sintered body having a high density and a high linear transmission without adding sintering aids such as LiF.

The hot pressing is carried out at temperatures of 1,200 to 1,700°C in vacuum. It is difficult to obtain a sintered body having a high density relative to the theoretical density of 95% or more at temperatures lower than 1,200°C while MgO is evaporated in vacuum at temperatures exceeding 1,700°C and Al₂O₃ (corundum) is apt to be deposited as a second phase when cooled, whereby the light transmission is reduced. In addition, in the case where the pressure of the hot press is less than 9.81 MPa (100 kg/cm²), a sintered body having a high density relative to the theoretical density of 95% or more is difficult to be obtained while if the pressure of the hot press exceeds 49.03 MPa (500 kg/cm²), a usual graphite mould is difficult to be used in view of strength.

In the HIP treatment, the surface of the spinel sintered body is pressurized, preferably in the isotropically compressed direction, at high temperatures and pressures so that the removal of voids is promoted by plastic deformation and the diffusion mechanism, and thus the density is increased. If the sintered body is treated with the pressurized gas in the furnace, the removal of the voids within the spinel sintered body is promoted, and thus the density is increased still further in comparison with conventional hot pressing methods. This effectively contributes to the improvement of light transmission. If the density of the sintered body before the HIP treatment or before the pressurized gas treatment is less than 95% of the theoretical density, most of the residual voids are in a so-called opened condition so that the pressurized gas may get into the sintered body through these voids, which adversely affects the density of the final product. In addition, even if a sintered body having a sufficiently high density is obtained, the light transmission may be reduced by the absorption of light by impurities.

Since the pressurized gas acts isotropically upon the spinel sintered body, the compaction due to the removal of voids proceeds more strongly in comparison with the conventional hot pressing method (pressurized in the up and down directions at about 98.1 MPa, 1,000 kg/cm²), whereby a sintered body having a uniform light transmission can be obtained.

The pressurized gas preferably includes argon gas, nitrogen gas, oxygen gas or mixture thereof. The addition of a slight quantity of oxygen gas helps to prevent the light transmission from being reduced by deoxidation from the spinel sintered body during the HIP treatment.

When step (c) above is used, the pressure of the pressurized gas preferably does not exceed 14.7 MPa (150 kg/cm²), an ordinary high-pressure cylinder can be used as it is, without the need for special pressurizing apparatus, so that the cost of facilities is relatively low.

The use of an inert gas such as nitrogen gas, helium gas, argon gas or mixture thereof as the pressurized gas is safe and convenient. However, a gas including some hydrogen can also be used.

When step (c) is used, the sintering before the pressurized gas is fed can be carried out in a multi-stage process but the incorporation of gases having large molecular diameters, such as nitrogen and argon, into the residual voids in the process of increasing the density by sintering the spinel moulded body, hinders the subsequent increase of density, so that this sintering is preferably carried out in an atmosphere of hydrogen and helium having a small molecular diameter.

The sintering is preferably carried out for 2 to 24 hours at temperatures of 1,400 to 1,800°C, which can increase the density of the sintered body to 95% or more of the theoretical density.

In addition, by adding a sintering aid such as CaO or LiF, the increase of the density to 95% or more relative to the theoretical density can be easily achieved even in a relatively short time such as 4 to 10 hours.

In order to prevent the light transmission from being reduced due to absorption by impurities, spinel powders having a purity of 99.5% or more are used in the present invention. In particular, the inclusion of transition metal elements, such as Fe, is undesirable. In addition, in order to obtain a compact sintered body, the diameter of primary particles of the spinel powders should be 0.2»m or less to give a specific surface area of 10 m²/g or more in BET value. Substances obtained by hydrolyzing alcoxides and the like are suitable for such a highly pure and fine spinel material powders.

In the second embodiment using the hot pressing step, it is unnecessary to add the sintering aids, such as LiF and CaO, so that the reduction of the transmission due to the second phase does not occur as in the conventional sintered bodies.

According to the above described production method of the present invention, a light-transmitting spinel sintered body can be obtained having a linear transmission, at a sample thickness of 3 mm, of 65% or more for visible and near infrared rays having wavelengths of 0.4 to 3»m and 75% or more for infrared rays having wavelengths of 3 to 5»m, which are remarkably superior to conventionally obtained spinel bodies, to a quite unexpected extent.

The present invention will be below described in more detail in the following examples.

### EXAMPLE 1.

Highly pure spinel powders having a purity of 99.7% and a specific surface area (BET value) of 11 m²/g were subjected to the hot pressing for 1 hour in a graphite mould having an inside diameter of 50 mm at a temperature of 1,600°C and a pressure of 19.6 MPa (200 kg/cm²) in a vacuum of 0.4 Pa (3 x 10⁻³ torr) to obtain a white sintered body having a density relative to the theoretical density of 96%.

The resulting sintered body was put in the HIP apparatus to be subjected to the HIP treatment for 3 hours at a temperature of 1,700°C and a pressure of 98.1 MPa (1,000 kg/cm²) in the presence of N₂ gas. The resulting spinel sintered body was externally colourless and transparent.

This spinel sintered body was subjected to mirror finishing to a thickness of 3 mm to measure the linear transmission by means of a spectrophotometer. This showed that the light transmission was superior to an extent of 83% in maximum for an infrared range having wavelengths of 3 to 5»m and 73% on the average for a range having wavelengths of 0.4 to 3»m.

### EXAMPLE 2

Highly pure spinel powders having a purity of 99.8% and a specific surface area (BET value) of 20 m²/g were subjected to the hot pressing for 3 hours in a graphite mould having an inside diameter of 50 mm at a temperature of 1,300°C and a pressure of 39.2 MPa (400 kg/cm²) in a vacuum of 10.7 Pa (8 x 10⁻² torr) to obtain a white sintered body having a density relative to the theoretical density of 98%.

The resulting sintered body was put in the HIP apparatus to be subjected to the HIP treatment for 2.5 hours at a temperature of 1,500°C and a pressure of 147.1 MPa (1,500 kg/cm²) in the presence of a mixture of argon with 5% O₂. The resulting spinel sintered body was externally colourless and transparent.

This spinel sintered body was subjected to mirror finishing to a thickness of 3 mm to measure the linear transmission by means of a spectrophotometer. This showed that the light transmission was superior to an extent of 82% in maximum for an infrared range having wavelengths of 3 to 5»m and 75% on the average for a range having wavelengths of 0.4 to 3»m.

### EXAMPLE 3

LiF was added to spinel powders having a purity of 99.9% and a specific surface area (BET value) of 14 m²/g in a quantity of 0.2% and the resulting mixture was subjected to the wet mixing for 24 hours in an alumina ball. The resulting mixture powders were dried and then subjected to isostatic moulding in a rubber mould having a diameter of 30 mm at a pressure of 196 MPa (2.0 tonne/cm²) to obtain a moulded body having a specific gravity of 2.2.

The resulting moulded body was temporarily sintered for 3 hours at a temperature of 1,100°C in a hydrogen furnace and then sintered for 24 hours at a temperature of 1,800°C to obtain a sintered body having a density relative to the theoretical density of 98% or more. The resulting sintered body was put in the HIP apparatus and held for 1 hour at a temperature of 1800°C and under a pressure of 196 MPa (2000 kg/cm²) by the use of a 10% O₂ - Ar gas mixture.

The resulting spinel sintered body was subjected to mirror finishing to a thickness of 3 mm to measure the transmission by means of an infrared spectrophotometer which showed that the light transmission was superior to an extent of 84% in maximum for an infrared range having wavelengths of 3 to 4»m.

### EXAMPLE 4

The sintered body which had been obtained by temporarily sintering in EXAMPLE 3 was put in a separate furnace and held for 2 hours at a temperature of 1,100°C under vacuum and then 10 hours at a temperature of 1,700°C in helium gas at 1 atmosphere pressure. Subsequently, argon gas at a pressure of 9.81 MPa (100 kg/cm²) was introduced into the furnace without delay and the sintered body held for 1 hour at 1,700°C.

The resulting spinel sintered body was subjected to mirror finishing to a thickness of 2 mm to measure the transmission by means of an infrared spectrophotometer, which showed that the light transmission was superior to an extent of 82% for an infrared range having wavelengths of 3 to 4»m.

Thus, the light-transmitting spinel sintered bodies obtained according to the present invention are superior in light transmission, so that they are particularly useful for a material of an infrared transmission window used at thicknesses of 2 mm or more.

## Claims

1. A method of producing a light-transmitting spinel sintered body from spinel powders having a purity of 99.5% or more and a specific surface area of at least 10 m²/g which comprises the steps of:
a) subjecting the spinel powders to isostatic moulding at pressures of 98.1 MPa (1 tonne/cm²) or more to impart a specific gravity of 2.0 or more and sintering the resulting moulded body in a multi-stage process using a sintering aid, and thereafter increasing the density and light transmission of the resulting sintered body by either:
b) subjecting the sintered body to a hot isostatic pressure treatment at a temperature of 1,400 to 1,800°C and a pressure of 49.03 MPa (500 kg/cm²) or more or
c) treating the sintered body in a furnace with a gas at a pressure of 981 kPa (10 kg/cm²) or more.

2. A method according to claim 1 wherein the specific surface area of the spinel powders is in a range from 10 to 14 m²/g.

3. A method according to claim 1 or claim 2 wherein the gas used for the hot isostatic pressing step comprises nitrogen or an inert gas, optionally mixed with oxygen.

4. A method according to any preceding claim wherein the sintered body subjected to hot isostatic pressing has a density of 95% or more of its theoretical density.

5. A method of producing a light-transmitting spinel sintered body from spinel powders having a purity of 99.5% or more and a specific surface area (BET value) of 10 m²/g or more which comprises the steps of:
i) subjecting the spinel powders to hot pressing in a vacuum at temperatures of 1,200 to 1,700°C and pressure of 9.81 to 49.03 MPa (100 - 500 kg/cm²) to compact them to a density of 95% or more relative to their theoretical density and
ii) subjecting the hot-pressed powders to a hot isostatic pressure treatment, in the presence of nitrogen or an inert gas mixed with oxygen, at a temperature of 1,400 to 1,800°C and a pressure 49.03 MPa (500 kg/cm²).

## Patentansprüche

1. Verfahren zum Herstellen eines lichtdurchlässigen Körpers aus gesintertem Spinell aus Spinellpulvern mit einer Reinheit von 99,5% oder mehr und einer spezifischen Oberfläche von wenigstens 10m²/g, umfassend die Schritte des
a) Unterwerfens der Spinellpulver einem isostatischen Formen bei Drücken von 98,1 MPa (1 Tonne/cm²) oder mehr, um ein spezifisches Gewicht von 2,0 oder mehr zu verleihen, und des Sinterns des resultierenden geformten Körpers in einem mehrstufigen, als Sinterhilfe verwendeten Prozeß sowie des anschließenden Erhöhens der Dichte und der Lichtdurchlässigkeit des resultierenden gesinderten Körpers durch
b) entweder Unterwerfen des gesinderten Körpers einer heißen isostatischen Druckbehandlung bei einer Temperatur von 1.400 bis 1.800°C und einem Druck von 49,03 MPa (500 kg/cm²) oder mehr,
c) oder Behandeln des gesinterten Körpers in einem Ofen mit einem Gas bei einem Druck von 981 kPa (10 kg/cm²) oder mehr.

2. Verfahren nach Anspruch 1, bei dem die spezifische Oberfläche der Spinellpulver im Bereich von 10 bis 14m²/g liegt.

3. Verfahren nach Anspruch 1 oder 2, bei dem das für den heißen isostatischen Preßschnitt verwendete Gas Stickstoff- oder ein Inertgas umfaßt, ggf. mit Sauerstoff gemischt.

4. Verfahren nach einem vorangehenden Anspruch, bei dem der gesinterte, dem heißen isostatischen Pressen unterworfene Körper eine Dichte von 95% oder mehr seiner theoretischen Dichte aufweist.

5. Verfahren zum Herstellen eines lichtdurchlässigen Körpers aus gesindertem Spinell aus Spinellpulvern mit einer Reinheit von 99,5% oder mehr und einer spezifischen Oberfläche (BET-Wert) von 10m²/g oder mehr, umfassend die Schritte des:
i) Unterwerfens der Spinellpulver einem Heißpressen in einem Vakuum bei Temperaturen von 1.200 bis 1.700°C und einem Druck von 9,81 bis 49,03 MPa (100-500 kg/cm²), um sie zu einer Dichte von 95% oder mehr bezüglich ihrer theoretischen Dichte zu pressen, und
ii) des Unterwerfens der heißgepreßten Pulver einer heißen isostatischen Druckbehandlung, in Gegenwart von Stickstoff- oder eines Inertgases, gemischt mit Sauerstoff, bei einer Temperatur von 1.400 bis 1.800°C und einem Druck von 49,03 MPa (500 kg/cm²).

## Revendications

1. Procédé pour fabriquer une pièce frittée translucide à partir de poudres de spinelle ayant une pureté de 99,5% ou plus et une surface spécifique d'au moins 10m²/g comprenant les étapes de :
a) soumettre les poudres de spinelle à un moule isostatique à des pression de 98,1 MPa (1 tonne/ cm²) ou plus pour obtenir une gravité de 2,0 ou plus et à un frittage de la pièce moulée résultante dans un procédé à étape multiple utilisant une assistance de frittage, puis augmenter la densité et la translucidité de la pièce frittée résultante, soit :
b) en soumettant la pièce frittée à un traitement de compression isostatique à chaud à une température de 1 400 à 1 800°C et à une pression de 49,03 MPa (500 kg/cm²) ou plus ou
c) en traitant la pièce frittée dans un four avec un gaz à une pression de 981 kPa (10 kg/cm²) ou plus.

2. Procédé selon la revendication 1, dans lequel la surface spécifique des poudres de spinelle et de l'ordre de 10 à 14 m²/g.

3. Procédé selon la revendication 1 ou la revendiction 2, dans lequel le gaz utilisé pour l'étape de compression isostatique à chaud comprend de l'azote ou un gaz inerte, éventuellement mélangé à de l'oxygène.

4. Procédé selon l'une quelconque des revendications précédentes, dans lequel la pièce frittée soumise à la compression isostatique à chaud à une densité de 95% ou plus de sa densité théorique.

5. Procédé pour fabriquer une pièce frittée translucide en spinelle à partir de poudres de spinelle ayant une pureté de 99,5% ou plus et une surface spécifique (valeur BET) de 10m²/g ou plus comprenant les étapes de :
i) soumettre les poudres de spinelle à une compression à chaud effectuée sous vide à une température de 1 200 à 1 700°C et une pression de 9,81 à 49,03 MPa (100-500 kg/cm²) pour les compacter à une densité de 95% ou plus par rapport à leur densité théorique, et
ii) soumettre les poudres comprimés à chaud à un traitement de compression isostatique à chaud, en présence d'azote ou d'un gaz inerte mélangé à de l'oxygène, à une température de 1400 à 1 800°C et a une pression de 49,03 MPa (500 kg/cm²).
